# EUROPÄISCHE PATENTSCHRIFT

(11) **EP 2 478 236 B1**
(45) Veröffentlichungstag und Bekanntmachung des Hinweises auf die Patenterteilung: **12.08.2015**
(21) Anmeldenummer: 10744932.4
(22) Anmeldetag: 19.08.2010
(51) Int. Cl.: F16C 19/26, F16C 33/36, F16C 33/54

(54) **KUGELROLLENLAGER**
BALL ROLLER BEARING
ROULEMENT À ROULEAUX SPHÉRIQUES

(30) Priorität: 18.09.2009 DE 102009042166
(43) Veröffentlichungstag der Anmeldung: 25.07.2012
(73) Patentinhaber: Schaeffler Technologies AG & Co. KG, 91074 Herzogenaurach (DE)
(72) Erfinder: HOFMANN, Heinrich, 97422 Schweinfurt (DE); BOHR, Andreas-Johann, 91074 Herzogenaurach (DE); GEIGER, Ernst, 91352 Hallerndorf (DE); WEBER, Otmar, 96178 Pommersfelden (DE)
(86) Internationale Anmeldenummer: PCT/EP2010/062106
(87) Internationale Veröffentlichungsnummer: WO 2011/032800

(56) Entgegenhaltungen:
- US-A1- 2009 180 724

## Beschreibung

### Gebiet der Erfindung

Die Erfindung betrifft ein einreihiges Kugelrollenlager nach den oberbegriffsbildenden Merkmalen des Patentanspruchs 1, welches beispielsweise besonders vorteilhaft als Festlager für die Antriebs- oder Abtriebswelle eines Kfz-Schaltgetriebes einsetzbar ist.

### Hintergrund der Erfindung

Kugelrollenlager sind Wälzlager mit speziellen, als Kugelrollen ausgebildeten Wälzkörpern, die ausgehend von einer Kugelgrundform jeweils zwei von dieser Kugelgrundform abgeflachte, parallel zueinander angeordnete Seitenflächen aufweisen, zwischen denen jeweils die Laufflächen der Kugelrollen angeordnet sind. Derartige Kugelrollenlager sind in den verschiedensten Ausführungen als ein-, zwei-, drei oder auch vierreihige Radial- oder Schräg-Kugelrollenlager allgemein bekannt und benötigen durch die spezielle Wälzkörperform auch spezielle Käfigausführungen, um einerseits eine maximale Schräglage der Kugelrollen relativ zur Lagerlängsachse zu begrenzen sowie andererseits ein Taumeln der Kugelrollen quer zu ihrer Umlaufrichtung zu vermeiden.

Ein einreihiges Kugelrollenlager ist beispielsweise aus der zum Anmeldezeitpunkt der vorliegenden Patentanmeldung noch nicht veröffentlichten deutschen Patentanmeldung mit dem amtlichen Aktenzeichen 10 2008 016 977.3 vorbekannt und besteht im Wesentlichen aus einem äußeren Lagerring und einem inneren Lagerring sowie aus einer Vielzahl zwischen diesen Lagerringen angeordneter Kugelrollen, die mit ihren Laufflächen in zwei in die Innenseite des äußeren Lagerrings und in die Außenseite des inneren Lagerrings eingearbeitete rillenförmigen Laufbahnen abrollen und in Umfangsrichtung durch einen Lagerkäfig in gleichmäßigen Abständen zueinander gehalten werden. Dieser Lagerkäfig ist zweckmäßigerweise als Fensterkäfig mit zwei durchmessergleichen seitlichen Winkelborden, mehreren diese Winkelborde miteinander verbindenden Taschenstegen und mehreren durch diese Taschenstege voneinander getrennten Käfigtaschen ausgebildet, die jeweils eine aus einer quer zur Umfangsrichtung angeordneten Freikontur zum Einsetzen einer Kugelrolle in den Lagerkäfig und aus einer darin integrierten längs zur Umfangsrichtung angeordneten Querschnittskontur einer Kugelrolle gebildete Kreuzlochform aufweisen. Die quer zur Umfangsrichtung angeordnete Freikontur der Käfigtaschen entspricht dabei der Form einer direkt auf der Querachse einer Kugelrolle angeordneten Schnittebene, während die längs zur Umfangsrichtung angeordnete Querschnittskontur der Käfigtaschen die Form einer oberhalb der Querachse einer Kugelrolle angeordneten Schnittebene aufweist, so dass die Seitenkanten der Taschenstege mit den Radien der Laufflächen zweier benachbarter Kugelrollen entsprechenden bogenförmigen Führungsflächen für die Kugelrollen ausgebildet sind. Zur Herstellung eines solchen Lagerkäfigs wird in der Regel ein Blechband verwendet, das durch Profilieren der Winkelborde, Stanzen der Käfigtaschen, Ablängen auf Umfangsmaß, Einrollen zu einem Ring und Verschweißen der Ringenden endbearbeitet wird.

Ein gattungsbildendes einreihiges Kugelrollenlager ist beispielsweise aus der US 2009/180724 A1 vorbekannt und besteht im Wesentlichen aus einem äußeren Lagerring und einem inneren Lagerring sowie aus einer Vielzahl zwischen diesen Lagerringen angeordneter Kugelrollen, die mit ihren Laufflächen in zwei in die Innenseite des äußeren Lagerrings und in die Außenseite des inneren Lagerrings eingearbeitete rillenförmigen Laufbahnen abrollen und in Umfangsrichtung durch einen Lagerkäfig in gleichmäßigen Abständen zueinander gehalten werden. Dieser Lagerkäfig ist in an sich bekannter Weise als aus zwei Ringhälften zusammengefügter Blechnietkäfig ausgebildet, welcher für jede Kugelrolle einzelne dieselben an einer Teilkreislinie umschließende Käfigtaschen aufweist, die durch in Umfangsrichtung gerade Verbindungsstege miteinander verbunden sind. In die mit den Seitenflächen der Kugelrollen in Kontakt stehenden Längsstege der Käfigtaschen sind dabei sich über die Breite der Seitenflächen erstreckende Keilvertiefungen eingearbeitet, so dass die Kugelrollen über zwei reibungsarme Linienkontakte zwischen ihren Seitenflächen und den Längsstegen der Käfigtaschen einerseits eine axiale Führung zwischen den Lagerringen aufweisen und andererseits mit einem definierten Freiheitsgrad zum selbsttätigen Ausrichten an den Druckwinkel des Radialwälzlagers ausgebildet sind.

In der Praxis hat es sich jedoch gezeigt, dass derartigen Kugelrollenlagern aufgrund der geringen maximal einbaubaren Anzahl von Kugelrollen, die von den Abmessungen des inneren und des äußeren Lagerrings, dem Kugelrollendurchmesser und auch von der Käfigbauform abhängig ist, in Bezug auf die radiale Tragfähigkeit des Kugelrollenlagers Grenzen gesetzt sind.

### Aufgabe der Erfindung

Ausgehend von den dargelegten Nachteilen des bekannten Standes der Technik liegt der Erfindung deshalb die Aufgabe zu Grunde, ein Kugelrollenlager zu konzipieren, dessen Lagerkäfig konstruktiv so gestaltet ist, dass eine größere Anzahl von Kugelrollen in das Kugelrollenlager einbaubar ist und somit dessen radiale Tragfähigkeit vergrößert wird.

### Beschreibung der Erfindung

Erfindungsgemäß wird diese Aufgabe bei einem Kugelrollenlager nach dem Oberbegriff des Anspruchs 1 derart gelöst, dass der Lagerkäfig als Fensterkäfig mit zwei durchmessergleichen seitlichen Winkelborden, mehreren diese Winkelborde miteinander verbindenden Taschenstegen und mehreren durch diese Taschenstege voneinander getrennten Käfigtaschen ausgebildet ist, die jeweils eine aus einer quer zur Umfangsrichtung angeordneten Freikontur zum Einsetzen einer Kugelrolle in den Lagerkäfig und aus einer darin integrierten längs zur Umfangsrichtung angeordneten Querschnittskontur einer Kugelrolle gebildete Kreuzlochform aufweisen, durch welche die Seitenkanten der Taschenstege mit den Radien der Laufflächen zweier benachbarter Kugelrollen entsprechenden bogenförmigen Führungsflächen für die Kugelrollen ausgebildet sind, wobei die Taschenstege sowohl zwischen deren Seitenkanten als auch an deren Führungsflächen zusätzliche Materialprofilierungen zur Axialversteifung des Lagerkäfigs aufweisen und die Materialprofilierungen an deren Führungsflächen zugleich als Dämpfungsmittel gegen Lagergeräusche ausgebildet sind.

Bevorzugte Ausgestaltungen bzw. Weiterbildungen des erfindungsgemäß ausgebildeten Kugelrollenlagers werden in den Unteransprüchen beschrieben.

Danach ist es gemäß Anspruch 2 als erste Ausgestaltung des erfindungsgemäß ausgebildeten Kugelrollenlager vorgesehen, dass die Materialprofilierungen zwischen den Seitenkanten der Taschenstege bevorzugt als längsmittig in deren Oberflächen eingearbeitete Sicken ausgebildet sind. Dies hat sich besonders vorteilhaft erwiesen, da die Sicken somit nahezu kostenneutral in einem Arbeitsgang mit dem Ausstanzen der Käfigtaschen aus dem Blechband hergestellt werden können. Darüber hinaus ist es von Vorteil, wenn die Sicken sich nicht über die volle Länge der Taschenstege erstrecken, sondern beidseitig am Übergangsbereich der Taschenstege zu den seitlichen Winkelborden endend ausgebildet werden, da somit die in diesem Übergangsbereich wiederum erforderliche Elastizität für das die Lagermontage abschließende Einbördeln der seitlichen Winkelborde erhalten werden kann. Möglich ist es jedoch auch, die Sicken in die Unterseite der Taschenstege einzuarbeiten und/ oder außerhalb der Längsmitte der Taschenstege anzuordnen.

Eine zweite vorteilhafte Ausgestaltung des erfindungsgemäß ausgebildeten Kugelrollenlagers ist es nach Anspruch 3 darüber hinaus noch, dass die Materialprofilierungen an den Führungsflächen der Taschenstege bevorzugt als radial nach außen gerichtete Bördelungen zusätzlich an die Führungsflächen angeformter Materiallappen ausgebildet sind. Diese Materiallappen werden dabei ebenso mit dem Ausstanzen der Käfigtaschen aus dem Blechband hergestellt und sind somit ebenfalls nahezu kostenneutral. Die mit diesen Materiallappen hergestellten Bördelungen an den Führungsflächen der Käfigtaschen tragen dabei zur weiteren axialen Versteifung der Taschenstege des Lagerkäfigs bei und haben zugleich den weiteren Vorteil, dass diese durch die erzeugte Steifigkeit sowie durch die entstehende verrundete Profilierung der Führungsflächen als Dämpfungsmittel gegen die beim Vor- und Nachlauf der Kugelrollen im Lagerbetrieb entstehenden Lagergeräusche wirken.

Das erfindungsgemäß ausgebildete Kugelrollenlager weist somit gegenüber den bekannten Kugelrollenlagern den Vorteil auf, dass es durch die Ausbildung des Lagerkäfigs als Fensterkäfig mit zwei durchmessergleichen seitlichen Winkelborden, mehreren diese Winkelborde miteinander verbindenden Taschenstegen und mehreren durch diese Taschenstege voneinander getrennten Käfigtaschen, die jeweils eine aus einer quer zur Umfangsrichtung angeordneten Freikontur zum Einsetzen einer Kugelrolle in den Lagerkäfig und aus einer darin integrierten längs zur Umfangsrichtung angeordneten Querschnittskontur einer Kugelrolle gebildete Kreuzlochform aufweisen, durch welche die Seitenkanten der Taschenstege mit den Radien der Laufflächen zweier benachbarter Kugelrollen entsprechenden bogenförmigen Führungsflächen für die Kugelrollen ausgebildet sind, mit einer größeren Anzahl von direkt in den Lagerkäfig einsetzbarer Kugelrollen befüllbar ist und somit eine vergrößerte radiale Tragfähigkeit aufweist. Darüber hinaus kann durch gezielte Materialprofilierungen an den Taschenstegen des Lagerkäfigs eine Taschengeometrie geschaffen werden, die einerseits eine erhebliche Axialversteifung des Lagerkäfigs bewirkt und damit ggf. beim Einbördeln der seitlichen Winkelborde entstehende axiale Ausbeulungen der Taschenstege vermeidet und die gleichzeitig scharfkantige Führungsflächen an den Käfigtaschen verrundet und damit unerwünschte Lagergeräusche vermeidet.

### Kurze Beschreibung der Zeichnungen

Eine bevorzugte Ausführungsform des erfindungsgemäß ausgebildeten Kugelrollenlagers wird nachfolgend unter Bezugnahme auf die beigefügten Zeichnungen näher erläutert. Dabei zeigen:
- Figur 1: eine räumliche Gesamtansicht eines erfindungsgemäß ausgebildeten Kugelrollenlagers;
- Figur 2: einen räumlichen Querschnitt durch das erfindungsgemäß ausgebildete Kugelrollenlager in Figur 1;
- Figur 3: den Schnitt A - A durch den Lagerkäfig des erfindungsgemäß ausgebildete Kugelrollenlagers gemäß Figur 4;
- Figur 4: den Schnitt B - B durch den Lagerkäfig des erfindungsgemäß ausgebildete Kugelrollenlagers gemäß Figur 3.
- Figur 5: eine Vergrößerung der Einzelheit X des Lagerkäfigs des erfindungsgemäß ausgebildete Kugelrollenlagers gemäß Figur 3.

### Ausführliche Beschreibung der Zeichnungen

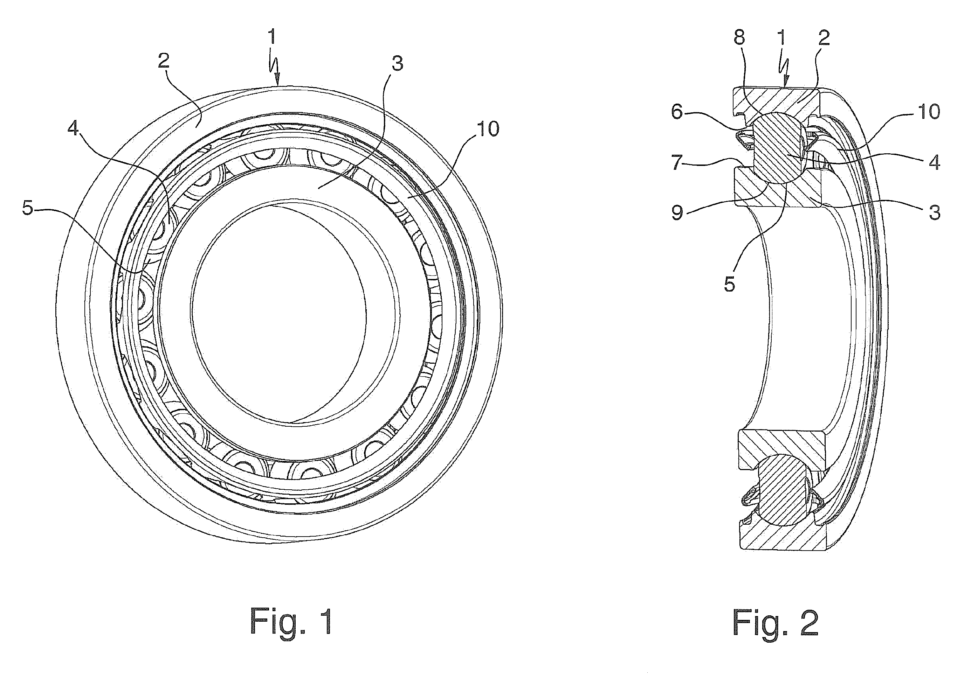

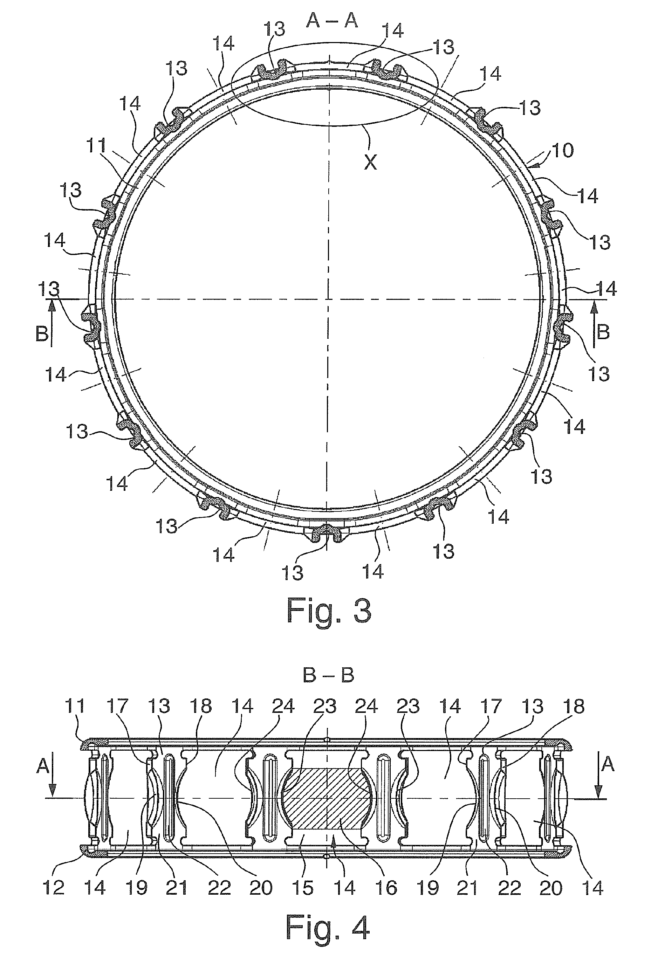

Aus den Figuren 1 und 2 geht deutlich ein Kugelrollenlager 1 hervor, welches im Wesentlichen aus einem äußeren Lagerring 2 und einem inneren Lagerring 3 sowie aus einer Vielzahl zwischen diesen Lagerringen 2, 3 angeordneter Kugelrollen 4 besteht, die mit ihren Laufflächen 5 in zwei in die Innenseite 6 des äußeren Lagerrings 2 und in die Außenseite 7 des inneren Lagerrings 3 eingearbeitete rillenförmigen Laufbahnen 8, 9 abrollen und in Umfangsrichtung durch einen Lagerkäfig 10 in gleichmäßigen Abständen zueinander gehalten werden. Der Lagerkäfig 10 ist dabei, wie die Figuren 3 und 4 zeigen, als Fensterkäfig ausgebildet, der zwei durchmessergleiche seitliche Winkelborde 11, 12, mehrere diese Winkelborde 11, 12 miteinander verbindende Taschenstege 13 und mehrere durch diese Taschenstege 13 voneinander getrennte Käfigtaschen 14 aufweist. Die einzelnen Käfigtaschen 14 des Lagerkäfigs 10 weisen dabei deutlich sichtbar jeweils eine Kreuzlochform auf, die ,wie in Figur 4 dargestellt, aus einer quer zur Umfangsrichtung angeordneten Freikontur 15 zum Einsetzen einer Kugelrolle 4 in den Lagerkäfig 10 sowie aus einer darin integrierten längs zur Umfangsrichtung angeordneten und schraffiert dargestellten Querschnitts-kontur 16 einer Kugelrolle 4 gebildet wird, so dass die Seitenkanten 17, 18 der Taschenstege 13 mit den Radien der Laufflächen 5 zweier benachbarter Kugelrolle 4 entsprechenden bogenförmigen Führungsflächen 19, 20 für die Kugelrollen 4 ausgebildet sind.

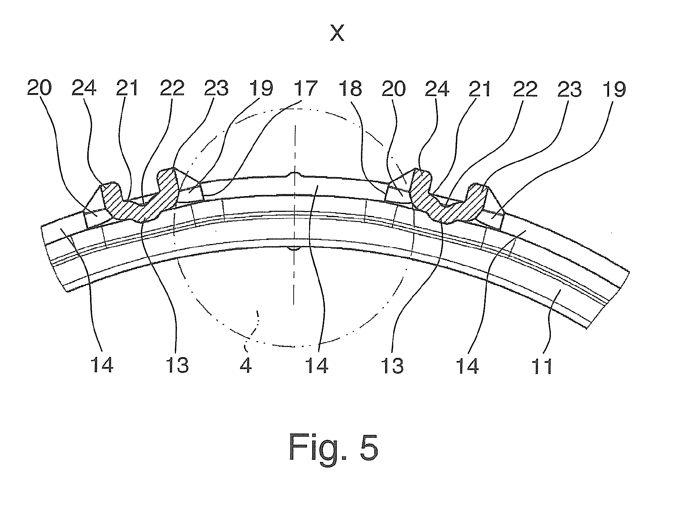

Desweiteren wird durch die Figuren 4 und 5 deutlich, dass die Taschenstege 13 sowohl zwischen deren Seitenkanten 17, 18 als auch an deren Führungsflächen 19, 20 zusätzliche Materialprofilierungen aufweisen, die zur Axialversteifung des Lagerkäfigs 10 und als Dämpfungsmittel gegen Lagergeräusche vorgesehen sind. Die Materialprofilierungen zwischen den Seitenkanten 17, 18 der Taschenstege 13 sind dabei deutlich sichtbar als längsmittig in deren Oberflächen 21 eingearbeitete Sicken 22 ausgebildet sind, die, wie Figur 4 zeigt, sich nicht über die volle Länge der Taschenstege 13 erstrecken, sondern beidseitig am Übergangsbereich der Taschenstege 13 zu den seitlichen Winkelborden 11, 12 enden, um somit die in diesem Übergangsbereich erforderliche Elastizität für das die Lagermontage abschließende Einbördeln der seitlichen Winkelborde 11, 12 zu erhalten. Die Materialprofilierungen an den Führungsflächen 18, 19 der Taschenstege 13 sind dagegen als radial nach außen gerichtete Bördelungen 23, 24 zusätzlicher, an die Führungsflächen 19, 20 angeformter Materiallappen ausgebildet, die zur weiteren axialen Versteifung der Taschenstege 13 des Lagerkäfigs 10 beitragen und zugleich den weiteren Vorteil haben, dass diese durch die erzeugte Steifigkeit sowie durch die entstehende verrundete Profilierung der Führungsflächen 18, 19 als Dämpfungsmittel gegen die beim Vor- und Nachlauf der in Figur 5 strichpunktiert angedeuteten Kugelrollen 4 im Lagerbetrieb entstehenden Lagergeräusche wirken,

### Bezugszahlenliste

- 1: Kugelrollenlager
- 2: äußerer Lagerring
- 3: innerer Lagerring
- 4: Kugelrollen
- 5: Laufflächen
- 6: Innenseite von 2
- 7: Außenseite von 3
- 8: Laufbahn in 6
- 9: Laufbahn in 7
- 10: Lagerkäfig
- 11: Winkelbord
- 12: Winkelbord
- 13: Taschenstege
- 14: Käfigtaschen
- 15: Freikontur in 14
- 16: Querschnittskontur von 4 in 14
- 17: Seitenkante von 13
- 18: Seitenkante von 13
- 19: Führungsfläche an 17
- 20: Führungsfläche an 18
- 21: Oberfläche von 13
- 22: Sicken in 21
- 23: Bördelung an 19
- 24: Bördelung an 20

## Patentansprüche

1. Kugelrollenlager (1), im Wesentlichen bestehend aus einem äußeren Lagerring (2) und einem inneren Lagerring (3) sowie aus einer Vielzahl zwischen diesen Lagerringen (2, 3) angeordneter Kugelrollen (4), die mit ihren Laufflächen (5) in zwei in die Innenseite (6) des äußeren Lagerrings (2) und in die Außenseite (7) des inneren Lagerrings (3) eingearbeitete rillenförmigen Laufbahnen (8, 9) abrollen und in Umfangsrichtung durch einen Lagerkäfig (10) in gleichmäßigen Abständen zueinander gehalten werden, **dadurch gekennzeichnet, dass** der Lagerkäfig (10) als Fensterkäfig mit zwei durchmessergleichen seitlichen Winkelborden (11, 12), mehreren diese Winkelborde (11, 12) miteinander verbindenden Taschenstegen (13) und mehreren durch diese Taschenstege (13) voneinander getrennten Käfigtaschen (14) ausgebildet ist, die jeweils eine aus einer quer zur Umfangsrichtung angeordneten Freikontur (15) zum Einsetzen einer Kugelrolle (4) in den Lagerkäfig (10) und aus einer darin integrierten längs zur Umfangsrichtung angeordneten Querschnittskontur (16) einer Kugelrolle (4) gebildete Kreuzlochform aufweisen, durch welche die Seitenkanten (17, 18) der Taschenstege (13) mit den Radien der Laufflächen (5) zweier benachbarter Kugelrollen (4) entsprechenden bogenförmigen Führungsflächen (19, 20) für die Kugelrollen (4) ausgebildet sind, wobei die Taschenstege (13) sowohl zwischen deren Seitenkanten (17, 18) als auch an deren Führungsflächen (19, 20) zusätzliche Materialprofilierungen zur Axialversteifung des Lagerkäfigs (10) aufweisen und die Materialprofilierungen an deren Führungsflächen (19, 20) zugleich als Dämpfungsmittel gegen Lagergeräusche ausgebildet sind.

2. Kugelrollenlager nach Anspruch 1, **dadurch gekennzeichnet, dass** die Materialprofilierungen zwischen den Seitenkanten (17, 18) der Taschenstege (13) bevorzugt als längsmittig in deren Oberflächen (21) eingearbeitete Sicken (22) ausgebildet sind.

3. Kugelrollenlager nach Anspruch 1, **dadurch gekennzeichnet, dass** die Materialprofilierungen an den Führungsflächen (18, 19) der Taschenstege (13) bevorzugt als radial nach außen gerichtete Bördelungen (23, 24) zusätzlich an die Führungsflächen (19, 20) angeformter Materiallappen ausgebildet sind.

## Claims

1. Ball roller bearing (1), essentially comprising an outer bearing ring (2), an inner bearing ring (3) and a multiplicity of ball rollers (4) arranged between said bearing rings (2, 3), which ball rollers roll on the running surfaces (5) thereof in two groove-shaped races (8, 9) machined into the inner side (6) of the outer bearing ring (2) and into the outer side (7) of the inner bearing ring (3) and are held at uniform distances from one another in the circumferential direction by a bearing cage (10), **characterized in that** the bearing cage (10) is designed as a window cage having two lateral angular flanges (11, 12) of identical diameter, a plurality of pocket webs (13) which connect said angular flanges (11, 12) to one another, and a plurality of cage pockets (14) which are separated from one another by said pocket webs (13) and in each case have a capstan shape which is formed from a free contour (15) which is arranged transversely with respect to the circumferential direction for inserting a ball roller (4) into the bearing cage (10) and from a cross-sectional contour (16) of a ball roller (4), which cross-sectional contour (16) is integrated in the former and is arranged longitudinally with respect to the circumferential direction, by which capstan shape the side edges (17, 18) of the pocket webs (13) are configured with the radii of the arcuate guide faces (19, 20) for the ball rollers (4), which guide faces (19, 20) correspond to the running surfaces (5) of two adjacent ball rollers (4), wherein the pocket webs (13) have additional material profiles for the axial reinforcement of the bearing cage (10), both between their side edges (17, 18) and on their guide faces (19, 20), and the material profiles on their guide faces (19, 20) are configured at the same time as damping means against bearing noise.

2. Ball roller bearing according to Claim 1, **characterized in that** the material profiles between the side edges (17, 18) of the pocket webs (13) are preferably configured as beads (22) which are machined longitudinally centrally into their surfaces (21).

3. Ball roller bearing according to Claim 1, **characterized in that** the material profiles on the guide faces (18, 19) of the pocket webs (13) are preferably configured as radially outwardly directed borders (23, 24) of material tabs which are additionally formed integrally onto the guide faces (19, 20).

## Revendications

1. Roulement à rouleaux sphériques (1) constitué essentiellement d'une bague de roulement extérieure (2) et d'une bague de roulement intérieure (3) ainsi que d'une pluralité de rouleaux sphériques (4) disposés entre ces bagues de roulement (2, 3) qui roulent avec leurs surfaces de roulement (5) dans deux chemins de roulement (8, 9) en forme de gorges réalisés dans le côté intérieur (6) de la bague de roulement extérieure (2) et dans le côté extérieur (7) de la bague de roulement intérieure (3) et qui sont retenus à distance uniforme les uns des autres dans la direction périphérique par une cage de roulement (10), **caractérisé en ce que** la cage de roulement (10) est réalisée sous forme de cage à fenêtres avec deux bords coudés latéraux (11, 12) de même diamètre, plusieurs nervures de cavités (13) connectant l'un à l'autre ces bords coudés (11, 12) et plusieurs cavités de cage (14) séparées les unes des autres par ces nervures de cavités (13), ces cavités de cage présentant à chaque fois une forme en trou cruciforme formée d'un contour libre (15) disposé transversalement à la direction périphérique pour l'insertion d'un rouleau sphérique (4) dans la cage de roulement (10) et d'un contour en section transversale (16) d'un rouleau sphérique (4) intégré dans celle-ci et disposé longitudinalement par rapport à la direction périphérique, lesquelles formes en trou cruciforme constituent les arêtes latérales (17, 18) des nervures de cavités (13) avec des surfaces de guidage (19, 20) de forme arquée pour les rouleaux sphériques (4) correspondant aux rayons des surfaces de roulement (5) de deux rouleaux sphériques adjacents (4), les nervures de cavités (13) présentant à la fois entre leurs arêtes latérales (17, 18) et au niveau de leurs surfaces de guidage (19, 20) des profilages de matériau supplémentaires pour la rigidification axiale de la cage de roulement (10) et les profilages de matériau étant réalisés au niveau de leurs surfaces de guidage (19, 20) en même temps comme des moyens d'amortissement contre des bruits de roulement.

2. Roulement à rouleaux sphériques selon la revendication 1, **caractérisé en ce que** les profilages de matériau entre les arêtes latérales (17, 18) des nervures de cavités (13) sont réalisés de préférence sous forme de moulures (22) réalisées longitudinalement au centre dans leurs surfaces (21).

3. Roulement à rouleaux sphériques selon la revendication 1, **caractérisé en ce que** les profilages de matériau sont réalisés au niveau des surfaces de guidage (18, 19) des nervures de cavités (13) de préférence sous la forme de bordages orientés radialement vers l'extérieur (23, 24) en plus de volets de matériau façonnés sur les surfaces de guidage (19, 20).
